# EUROPEAN PATENT APPLICATION

(11) **EP 2 500 192 A1**
(43) Date of publication of application: **19.09.2012**
(21) Application number: 12157674.8
(22) Date of filing: 01.03.2012
(51) Int. Cl.: B60H 1/00

(54) **Vehicle air conditioning apparatus**

(30) Priority: 14.03.2011 JP 2011055665
(71) Applicant: Kabushiki Kaisha Toyota Jidoshokki, Kariya-shi Aichi 448-8671 (JP)
(72) Inventor: Katagiri, Yoshihiro, Kariya-shi,, Aichi 448-8671 (JP); Suzuki, Junya, Kariya-shi,, Aichi 448-8671 (JP); Yokomachi, Naoya, Kariya-shi,, Aichi 448-8671 (JP)
(74) Representative: TBK

(57) **Abstract**

A vehicle air conditioning apparatus includes an air conditioning unit (11), center outlet ports (12a,13a), and side outlet ports (12b,13b). The center outlet ports and side outlet ports are provided in an instrument panel of a vehicle and blow out conditioned air transferred from the air conditioning unit to the inside of a passenger compartment. The vehicle air conditioning unit blows conditioned air from the center outlet ports and the side outlet ports. When cooling operation is performed in a face mode, the airflow rate from the side outlet ports (12b,13b) is set greater than the airflow rate from the center outlet ports (12a,13a).

## Description

### BACKGROUND OF THE INVENTION

The present invention relates to a vehicle air conditioning apparatus that blows conditioned air to an occupant from center outlet ports and side outlet ports during face mode operation.

Vehicles are equipped with a vehicle air conditioning apparatus as disclosed in, for example, Japanese Laid-Open Patent Publication No. 5-32119. This type of a vehicle air conditioning apparatus blows out conditioned air from outlet ports provided in a passenger compartment. The temperature of the conditioned air is adjusted by an air conditioning unit including means for cooling or heating air. The outlet ports provided in an instrument panel includes center outlet ports, which are open at the center of the vehicle in the lateral direction, and side outlet ports, which are open at positions close to entry and exit doors. The conditioned air flows out from the outlet ports toward the upper body of an occupant.

In general, the entry and exit doors of the vehicle have window glass. Therefore, the occupant might feel a temperature difference between the window sides and at the center due to the influence of the solar radiation and heat transfer from the glass. In the vehicle air conditioning apparatus, occupant comfort may further be improved by conditioning the air by taking into consideration the above-mentioned temperature difference.

### SUMMARY OF THE INVENTION

Accordingly, it is an objective of the present invention to provide a vehicle air conditioning apparatus that improves occupant comfort by conditioning air taking into consideration the temperature difference between a center portion and side portions of a vehicle.

To achieve the above objective, one aspect of the present invention provides a vehicle air conditioning apparatus, which includes an air conditioning unit, outlet ports, and an airflow rate control section. The outlet ports are provided in an instrument panel of a vehicle. The outlet ports blow out conditioned air transferred from the air conditioning unit toward a passenger compartment. The outlet ports include center outlet ports, which are open at the center of the vehicle in the lateral direction, and side outlet ports, which are open at positions close to entry and exit doors. The airflow rate control section adjusts the airflow rate of air that flows out from the center outlet ports and the side outlet ports. The vehicle conditioning apparatus is operable in a face mode, in which the conditioned air is directed toward an occupant. When operated in the face mode, the airflow rate control section sets, the airflow rate from the side outlet ports to be greater than the airflow rate from the center outlet ports.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a schematic diagram illustrating a passenger compartment of a vehicle including a vehicle air conditioning apparatus according to one embodiment of the present invention; and
Fig. 2 is a schematic diagram illustrating an air conditioning duct and an air conditioning unit of the vehicle air conditioning apparatus of Fig. 1.

### DETAILED DESCRIPTION OF THE PREFERRED EMBODIMENTS

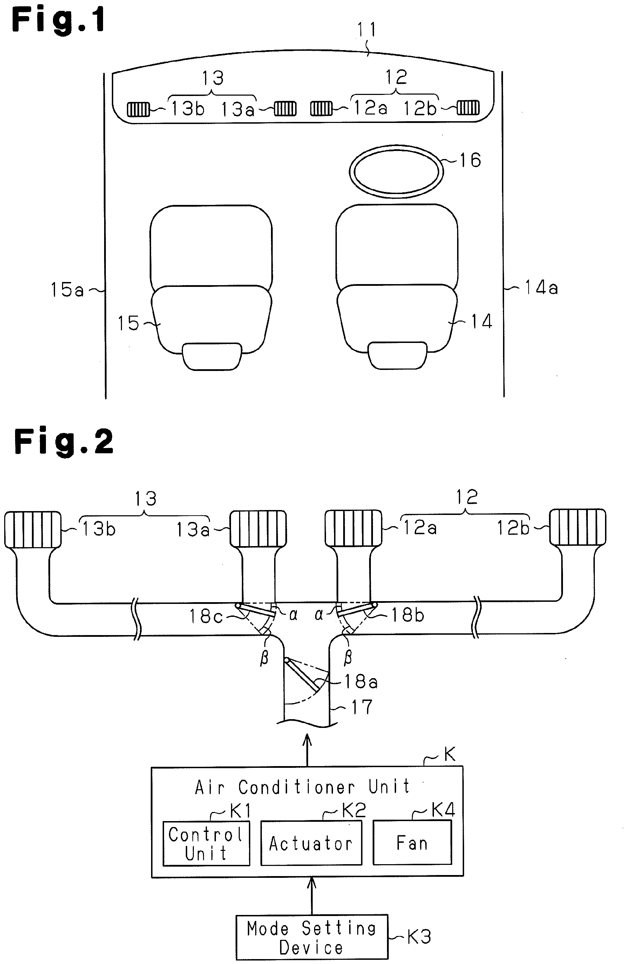

A vehicle air conditioning apparatus according to one embodiment of the present invention will now be described with reference to Figs. 1 and 2.

As shown in Fig. 1, an instrument panel 11 is provided on the front surface of a passenger compartment of a vehicle (automobile). The instrument panel 11 includes outlet ports 12, 13, which blow out conditioned air toward the passenger compartment. The vehicle is equipped with an air conditioning unit K (Fig. 2), which generates the conditioned air. The conditioned air, the temperature of which is adjusted by the air conditioning unit K, flows out from the outlet ports 12, 13. More specifically, a center outlet port 12a and a side outlet port 12b are provided as the outlet port 12 for the driver's seat 14. A center outlet port 13a and a side outlet port 13b are provided as the outlet port 13 for a front passenger seat 15.

The center outlet ports 12a, 13a are open at the center portion of the instrument panel 11, and serve as center upper outlet ports, which blow out the conditioned air toward the upper body, that is, the head and the chest of occupants in the driver's seat 14 and the front passenger seat 15. The center portion of the instrument panel 11 corresponds to the center portion of the vehicle in the lateral direction. A steering wheel 16 is provided in front of the driver's seat 14 and is arranged between the center outlet port 12a and the side outlet port 12b for the driver's seat 14.

The side outlet ports 12b, 13b are open on the side portions of the instrument panel 11, and serve as side upper outlet ports, which blow out the conditioned air toward the upper body, that is, the head and the chest of the occupants in the driver's seat 14 and the front passenger seat 15. The side portions of the instrument panel 11 correspond to a side close to an entry and exit door 14a for getting in and out of the driver's seat 14 and a side close to an entry and exit door 15a for getting in and out of the front passenger seat 15. Each of the entry and exit doors 14a, 15a is provided with a non-illustrated window glass.

The vehicle also includes defroster outlet ports (not shown), which blow out the conditioned air toward the windshield, and foot outlet ports (not shown), which blow out the conditioned air toward the feet of the occupants in the driver's seat 14 and the front passenger seat 15.

As shown in Fig. 2, the vehicle includes a duct 17, which transfers the conditioned air the temperature of which is adjusted by the air conditioning unit K. The duct 17 includes a branch portion that branches into the center outlet port 12a and the side outlet port 12b, and a branch portion that branches into the center outlet port 13a and the side outlet port 13b. On-off valves 18a, 18b, 18c for opening and closing the outlet ports 12, 13 are pivotally mounted to the duct 17. The conditioned air is blown by a blower K4 in the air conditioning unit K. The on-off valve 18b is arranged in the duct 17 at a branch portion between the center outlet port 12a and the side outlet port 12b. The on-off valve 18a opens and closes both the center outlet ports 12a, 13a and the side outlet ports 12b, 13b by opening and closing the duct 17. The on-off valve 18c is arranged in the duct 17 at a branch portion between the center outlet port 13a and the side outlet port 13b. The on-off valve 18b opens and closes the center outlet port 12a and the side outlet port 12b for the driver's seat 14. The on-off valve 18b adjusts the airflow rate from both the center outlet ports 12a and the side outlet ports 12b. The on-off valve 18c opens and closes the center outlet port 13a and the side outlet port 13b for the front passenger seat 15. The on-off valve 18c adjusts the airflow rate from both the center outlet ports 13a and the side outlet ports 13b. The opening degrees of the on-off valves 18a to 18c are adjusted by activating an on-off actuator K2 constituting the air conditioning unit K. The on-off actuator K2 is controlled by a control section K1 of the air conditioning unit K. The control section K1 is formed by a microcomputer.

As shown in Fig. 2, a mode setting device K3 is connected to the control section K1 of the air conditioning unit K. The occupant sets, or instructs, the blowing mode by the mode setting device K3. The blowing mode includes a face mode, in which the conditioned air flows out from the outlet ports 12, 13, a defroster mode, in which the conditioned air flows out from the defroster outlet ports, and a foot mode, in which the conditioned air flows out from the foot outlet ports. The control section K1 adjusts the opening degrees of the on-off valves 18a, 18b, 18c according to the blowing mode set by the mode setting device K3. Accordingly, the conditioned air is transferred through the duct 17 to the outlet ports corresponding to the blowing mode, and is directed out to the passenger compartment from the outlet ports. The air conditioning unit K includes an air cooling section such as an evaporator and an air heating section such as a heater in addition to the above-mentioned control section K1, the on-off actuator K2, and the mode setting device K3.

Operations of the vehicle air conditioning apparatus according to the present embodiment will now be described.

When cooling operation is performed in the face mode, the control section K1 adjusts the opening degrees of the on-off valves 18a, 18b, 18c such that the conditioned air the temperature of which is adjusted by the air conditioning unit K is directed out from the outlet ports 12, 13. More specifically, the control section K1 fully opens the on-off valve 18a, and transfers the conditioned air to the outlet ports 12, 13 through the duct 17. In the vehicle air conditioning apparatus according to the present embodiment, when the on-off valve 18a is fully opened, the conditioned air is not transferred to the defroster outlet ports or the foot outlet ports.

When cooling operation is performed in the face mode, the control section K1 adjusts the opening degrees of the on-off valves 18b, 18c such that the airflow rate from the side outlet ports 12b, 13b is greater than the airflow rate from the center outlet ports 12a, 13a. That is, the conditioned air that flows out from the blower K4 of the air conditioning unit K is distributed more to the side outlet ports 12b, 13b than the center outlet ports 12a, 13a by the on-off valves 18b, 18c. The on-off valves 18b, 18c function as an electrical air distribution ratio changing section, which operates in accordance with a command from the control section K1. More specifically, the control section K1 adjusts the opening degree of the on-off valve 18b such that the opening degree β of the path through which the conditioned air flows to the side outlet port 12b is greater than the opening degree α of the path through which the conditioned air flows to the center outlet port 12a as shown in Fig. 2. Also, the control section K1 adjusts the opening degree of the on-off valve 18c such that the opening degree β of the path through which the conditioned air flows to the side outlet port 13b is greater than the opening degree α of the path through which the conditioned air flows to the center outlet port 13a as shown in Fig. 2. The opening degrees α of the on-off valves 18b, 18c are equal to each other, and the opening degrees β of the on-off valves 18b, 18c are equal to each other.

Thus, in the vehicle air conditioning apparatus of the present embodiment, the airflow rate from the side outlet ports 12b, 13b close to the entry and exit doors 14a, 15a is greater than the airflow rate from the center outlet ports 12a, 13a at the vehicle center when cooling operation is performed in the face mode. In the vehicle air conditioning apparatus of the present embodiment, the airflow rate from the side outlet ports 12b, 13b is constantly set to be greater than the airflow rate from the center outlet ports 12a, 13a when the blowing mode is in the face mode.

In the present embodiment, the control section K1, the on-off actuator K2, and the on-off valves 18a to 18c constitute an airflow rate control section, which constantly sets the airflow rate from the side outlet ports 12b, 13b to be greater than the airflow rate from the center outlet ports 12a, 13a during the face mode operation. In the present embodiment, the components of the airflow rate control section, the air conditioning unit K, the center outlet ports 12a, 13a, and the side outlet ports 12b, 13b constitute the vehicle air conditioning apparatus.

Accordingly, the present embodiment has the following advantages.
(1) During the face mode operation, the airflow rate from the side outlet ports 12b, 13b is set to be greater than the airflow rate from the center outlet ports 12a, 13a. This increases the airflow rate to both sides of the vehicle that are easily influenced by the solar radiation and heat transfer from the window glass of the entry and exit doors 14a, 15a. Since the air is conditioned taking into consideration the difference between the temperature at the center portion of the vehicle and the temperature at the side portions, the occupant is not likely to feel the temperature difference, or unevenness, and occupant comfort is improved.
(2) During the cooling operation, the airflow rate from the side outlet ports 12b, 13b is set to be greater than the airflow rate from the center outlet ports 12a, 13a. In summer, the influence of the solar radiation and heat transfer from the window glass of the entry and exit doors 14a, 15a is great. Therefore, occupant comfort is further improved by conditioning the air taking into consideration the temperature difference between the center portion of the vehicle and the side portions during cooling operation.
(3) When the steering wheel 16 is arranged in front of the outlet ports, the steering wheel 16 becomes an obstacle, which diffuses the conditioned air, and thus reduces the cooling performance. However, in the present embodiment, since the steering wheel 16 is not arranged in front of the side outlet port 12b close to the driver's seat 14, the conditioned air reliably flows toward the occupant even if the airflow rate from the side outlet port 12b is increased. As a result, occupant comfort is improved.
(4) The airflow rate from the side outlet ports 12b, 13b is set to be greater than the airflow rate from the center outlet ports 12a, 13a by adjusting the opening degrees of the on-off valves 18b, 18c. Therefore, occupant comfort is improved while using the existing structure, that is, the structure of the duct 17.
(5) The conditioned air from the center outlet ports 12a, 13a is likely to blow to the rear part of the driver's seat 14 and the front passenger seat 15. The conditioned air from the side outlet ports 12b, 13b is not likely to blow to the rear part of the seats since the driver's seat 14 and the front passenger seat 15 become obstacles. Therefore, the conditioned air flows to the seating area of the driver's seat 14 and the front passenger seat 15 by increasing the airflow rate from the side outlet ports 12b, 13b during the face mode operation. Thus, comfort of the occupants in the driver's seat 14 and the front passenger seat 15 is improved.

The above described embodiment may be modified as follows.

Although the blowing mode is in the face mode, the airflow rate of the conditioned air may be adjusted in a different manner from the above described embodiment if the air conditioner operating mode is in a specific mode. For example, when the air conditioner operating mode is in a rapid cooling mode, the airflow rates from the outlet ports 12, 13 may be set equal to each other, or the airflow rate from the center outlet ports 12a, 13a may be set to be greater than the airflow rate from the side outlet ports 12b, 13b by adjusting the opening degrees of the on-off valves 18a to 18c.

The on-off valves 18b, 18c may be mounted in a state in which the opening degree cannot be changed, that is, the opening degree is fixed. In this case, the on-off valves 18b, 18c are mounted such that the opening degree β of the paths through which the conditioned air flows to the side outlet ports 12b, 13b is greater than the opening degree α of the paths through which the conditioned air flows to the center outlet ports 12a, 13a as described in the present embodiment.

Instead of the on-off valves 18b, 18c, the diameter of the duct that transfers the conditioned air to the center outlet ports 12a, 13a may be set smaller than the diameter of the duct that transfers the conditioned air to the side outlet ports 12b, 13b. The airflow rate from the side outlet ports 12b, 13b may be set greater than the airflow rate from the center outlet ports 12a, 13a with this structure.

In the present embodiment, the conditioned air branches from the common duct 17 to the center outlet ports 12a, 13a and the side outlet ports 12b, 13b. Instead, the conditioned air may be separately transferred to the center outlet ports 12a, 13a and the side outlet ports 12b, 13b through dedicated ducts. In this case, the airflow rate from the air conditioning unit K may be separately adjusted such that the airflow rate from the side outlet ports 12b, 13b is greater than that of the center outlet ports 12a, 13a.

When heating operation is performed in the face mode, the airflow rate of the conditioned air may be adjusted in the same manner as the above described embodiment.

The present invention may be embodied in a vehicle (automobile) including a rear seat in addition to the front seat including the driver's seat 14 and the front passenger seat 15, or a vehicle (automobile) including only the front seat.

The present invention may be embodied in various types of automobiles such as an engine type vehicle, a hybrid type vehicle, the driving source of which is an engine and a motor, and an electric vehicle, the driving source of which is a motor.

Therefore, the present examples and embodiments are to be considered as illustrative and not restrictive and the invention is not to be limited to the details given herein, but may be modified within the scope and equivalence of the appended claims.

A vehicle air conditioning apparatus includes an air conditioning unit, center outlet ports, and side outlet ports. The center outlet ports and side outlet ports are provided in an instrument panel of a vehicle and blow out conditioned air transferred from the air conditioning unit to the inside of a passenger compartment. The vehicle air conditioning unit blows conditioned air from the center outlet ports and the side outlet ports. When cooling operation is performed in a face mode, the airflow rate from the side outlet ports is set greater than the ', airflow rate from the center outlet ports.

## Claims

1. A vehicle air conditioning apparatus, comprising;
an air conditioning unit (K1), which generates conditioned air;
a plurality of outlet ports (12, 13) provided in an instrument panel (11) of a vehicle,
wherein the outlet ports blow out the conditioned air transferred from the air conditioning unit toward a passenger compartment,
the outlet ports (12, 13) including center outlet ports (12a, 13a), which are open at the center of a vehicle in a lateral direction, and side outlet ports (12b, 13b), which are open at positions close to entry and exit doors; and
an airflow rate control section (K1, K2, 18a-18c), which adjusts the airflow rate of air that flows out from the center outlet ports (12a, 13a) and the side outlet ports (12b, 13b), wherein
the vehicle conditioning apparatus is operable in a face mode, in which the conditioned air is directed to an occupant, and
the vehicle conditioning apparatus being **characterized in that** when operated in the face mode, the airflow rate control section (K1, K2, 18a-18c) sets the airflow rate from the side outlet ports (12b, 13b) to be greater than the airflow rate from the center outlet ports (12a, 13a).

2. The air conditioning apparatus according to claim 1, **characterized in that** the airflow rate control section (K1, K2, 18a-18c) sets the airflow rate from the side outlet ports (12b, 13b) to be greater than the airflow rate from the center outlet ports (12a, 13a) during cooling operation.

3. The air conditioning apparatus according to claim 1 or 2, **characterized by** a duct (17), which connects the air conditioning unit to the center outlet ports (12a, 13a) and the side outlet ports (12b, 13b), wherein the airflow rate control section (K1, K2, 18a-18c) includes at least one on-off valve (18a-18c) pivotally mounted inside the duct (17) and adjusts the airflow rate of the conditioned air transferred from the air conditioning unit to the center outlet ports (12a, 13a) and the side outlet ports (12b, 13b).

4. The vehicle air conditioning apparatus according to claim 3, **characterized in that** the airflow rate control section (K1, K2, 18a-18c) adjusts the airflow rate of the conditioned air transferred to the center outlet ports (12a, 13a) and the side outlet ports (12b, 13b) by adjusting the opening degree of the at least one on-off valve (18a-18c).

5. The vehicle air conditioning apparatus according to claim 3, **characterized in that** the duct (17) includes a branch portion, which branches to the center outlet ports (12a, 13a) and the side outlet ports (12b, 13b), and the at least one on-off valve (18a-18c) includes a single on-off valve (18a-18c) located at the branch portion of the duct (17), and the single on-off valve adjusts the airflow rate from both the center outlet ports (12a, 13a) and the side outlet ports (12b, 13b).
